(19) Europäisches Patentamt
European Patent Office
Office européen des brevets

(11) **EP 3 674 896 A1**

(12) **EUROPEAN PATENT APPLICATION**

(43) Date of publication:
**01.07.2020 Bulletin 2020/27**

(51) Int Cl.:
***G06F 9/50*** *(2006.01)*

(21) Application number: **19219520.4**

(22) Date of filing: **23.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 CN 201811626288**

(71) Applicant: **Amlogic (Shanghai) Co., Ltd.
Shanghai 201203 (CN)**

(72) Inventors:
• ZENG, Tao
 Shanghai, 201203 (CN)
• PAN, Jianxin
 Shanghai, 201203 (CN)

(74) Representative: **Vatti, Francesco Paolo et al
Fumero S.r.l
Pettenkofferstrasse 20/22
80336 Munich (DE)**

(54) **KERNEL STACK DISTRIBUTION METHOD AND DEVICE**

(57) The invention discloses a kernel stack distribution method and device, and relates to the technical field of computers. According to the method and the device for allocating the kernel stack, the memory is allocated according to the required allocation mode. When the stack pointer of the thread overflows the page boundary in the address space, a page-missing exception is generated. A new storage page is distributed to the kernel stack in a page-missing exception processing program, and the new storage page is mapped to a target address space pointed by the kernel stack, so that the memory consumption of the kernel stack of the thread is greatly optimised, and the capability of detecting the kernel stack underflow exception is improved. A virtual address space is divided in advance for a thread kernel stack to use, so that the problem of memory fragmentation is effectively avoided.

EP 3 674 896 A1

```
┌────────────────────────────────────────────────┐
│ Step S1, distributing a contiguous target       │  S1
│ address space to the thread kernel stack based  │
│ on the virtual address space when an instruction│
│ of creating threads is received;                │
└────────────────────────────────────────────────┘
                       │
                       ▼
┌────────────────────────────────────────────────┐
│ Step S2, managing the mapping of the target     │  S2
│ address space of all the threads by using a     │
│ bitmap;                                          │
└────────────────────────────────────────────────┘
                       │
                       ▼
┌────────────────────────────────────────────────┐
│ Step S3, the target address space comprising an │  S3
│ exception cache area and a storage area, the    │
│ exception cache area being located at a header  │
│ area of the target address space;               │
└────────────────────────────────────────────────┘
                       │
                       ▼
┌────────────────────────────────────────────────┐
│ Step S4, distributing a storage page to the     │  S4
│ kernel stack, mapping the storage page to the   │
│ storage area of the target address space, a     │
│ stack pointer pointing to the target address    │
│ space where the storage page of the kernel stack│
│ is located when the threads run, and a bottom of │
│ the target address space to which the storage   │
│ page is mapped being an address boundary; and   │
└────────────────────────────────────────────────┘
                       │
                       ▼
┌────────────────────────────────────────────────┐
│ Step S5, when the stack pointer of the thread   │  S5
│ overflows a page boundary in the address, a     │
│ page-missing exception being generated in       │
│ hardware, a new storage page being distributed  │
│ to the kernel stack in a page-missing exception │
│ processing program, and the new storage page    │
│ being mapped to a target address space pointed  │
│ by the kernel stack.                            │
└────────────────────────────────────────────────┘
```

Figure 4

**Description**

BACKGROUND OF THE INVENTION

1. Field of the Invention

The invention relates to the technical field of computers, and more particularly, to a kernel stack distribution method and device.

2. Description of the Related Art

The stack is a memory area where local variables of a function are stored when programs run in the C programming language environment. The stack grows downward. For example, when the currently executing function calls a child function, a complier generates a PUSH instruction. When entering the child function, context of the parent function is saved, and storage space is allocated to the local variables used in the child function in the stack. In this case, a stack pointer decreases in value, that is, the stack grows downward. When the child function is fully executed, the compiler generates a corresponding POP instruction when the child function returns, restores the context saved by the parent function from the stack, and increases the stack pointer to the position of the parent function.

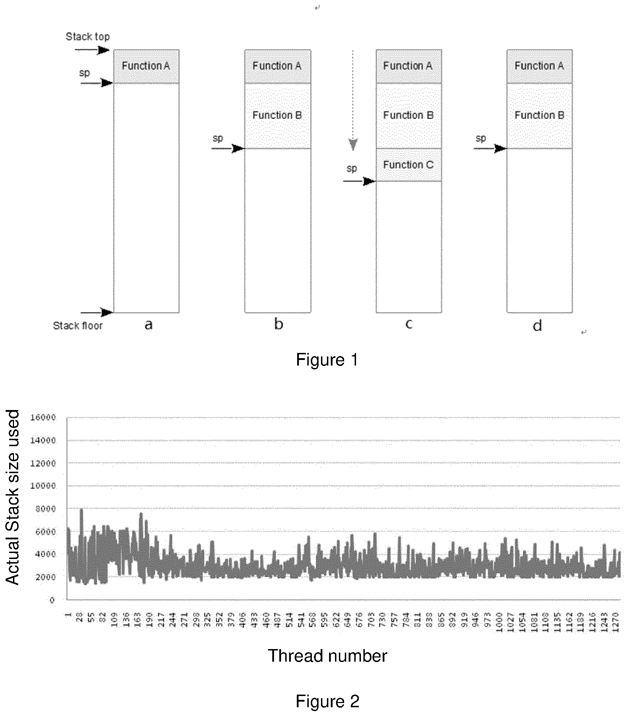

Figure 1 shows an example of stack changes during a function call. In this example, a function call relationship is as follows: Function A calls Function B, and Function B calls Function C. Before Function A starts running, a system sets a stack top stack pointer and a corresponding stack floor for Function A in advance. When Function A starts running, the stack pointer moves downward. A difference between the stack function and the stack top is stack space required for local variables in Function A, i.e., part a in Figure 1. When Function A calls Function B, the stack pointer moves downward further, i.e., part b in Figure 1, and the newly added area is the stack space required for local variables in Function B. When Function B calls Function C, the stack pointer moves downward further, i.e., part c in Figure 1, and the newly added area is the stack space required for local variables in Function C. After Function C has been completely executed, it returns to Function B, and the stack pointer moves upward to a previous position, i.e., part d in Figure 1.

It is apparent to those skilled in the art that the unfilled blank part in Figure 1 is stack space ready for use. If the function is called too deep, for example, when a recursive call is executed, the stack pointer will keep moving downward. If the stack pointer moves downward beyond a value of the stack floor, it may destroy data elsewhere and causes the system to become unstable, all of which is attributed to the stack overflow.

In the Linux environment, the Linux kernel allocates a stack, which is called a kernel stack, to each running thread, and the stack is essential for the running of the thread. The kernel stack of Linux is not only responsible for providing storage space for local variable during the function call, but also for providing memory space required for the storage of the context during the task scheduling and exception handling. The kernel stack is allocated in place when each thread is created, and is hooked into a thread-related data structure.

The size of the kernel stack may be varied depending on various factors, such as a chip system and the bit width of the OS. In ARM64 architecture, the size of the kernel stack is 16KB by default, that is, the kernel allocates a 16KB stack for each thread when it is created.

The Linux kernel provides some methods for debugging the kernel stack. Macro "CONFIG_DEBUG_STACK_USAGE" can be used to evaluate the use of the kernel stack by each thread. Its basic principle is to get the 16KB kernel stack, clear all the stack data, then roughly determine the stack depth used by the thread by looking for the position of non-zero value from the stack floor up.

Open this micro, and the system operates, and observe the usage of stacks performing various tasks. It can be found that most threads use small size of stack, far less than the size of 16 KB. Figure 2 shows the actual kernel stack usage of each thread captured by command "echo t > /proc/sysrq-trigger" (based on 3,14 kernel, P212 platform). The horizontal axis is the thread number, and the vertical axis is the stack size (unit: byte) actually used by the thread. It can be seen from Figure 2 that most threads actually use less than 6KB of thread stack size, and only a small part of threads use approximately 8KB of stack size, resulting in enormous waste of the kernel stack.

SUMMARY OF THE INVENTION

In order to solve the problem that the memory of the kernel stack is not fully utilised, the present invention provides a kernel stack distribution method and device, so that the memory consumption of the kernel stack of the thread is greatly optimized.

A kernel stack distribution method, wherein a virtual address space is divided in advance for a thread kernel stack to use, wherein the distribution method comprises:

Step S1, distributing a contiguous target address space to the thread kernel stack based on the virtual address space when an instruction of creating threads is received;
Step S2, managing the mapping of the target address space of all the threads by using a bitmap;
Step S3, the target address space comprising an exception cache area and a storage area, the exception cache area being located at a header area of the target address space;
Step S4, distributing a storage page to the kernel stack, mapping the storage page to the storage area of the target address space, a stack pointer pointing to the target address space where the storage page of the kernel stack is located when the threads run, and a bottom of the target address space to which the storage page is mapped being an address boundary; and

Step S5, when the stack pointer of the thread overflows a page boundary in the address, a page-missing exception being generated in hardware, a new storage page being distributed to the kernel stack in a page-missing exception processing program, and the new storage page being mapped to a target address space pointed by the kernel stack.

Preferably, wherein in Step S2, managing the mapping of the target address space by using the bitmap comprises:

in the bitmap, when a bit value is 0, it indicates a corresponding address space is not in use; when the bit value is 1, it indicates that the corresponding address space is in use, and a linear mapping relationship of the address space is expressed by formula (1):

$$T=A+N\times16KB \qquad (1)$$

wherein T represents an address of the created thread; A represents a start address of the virtual address space; and N represents a position of the bit value corresponding to the thread in the bitmap.

Preferably, wherein a capacity of the storage area of the target address space, to which the storage page is mapped, is 16KB.

Preferably, wherein in Step S5, when the stack pointer of the thread overflows a page boundary in the address, a new storage page is distributed to the kernel stack, and the new storage page is mapped to a target address space pointed by the kernel stack, and Step 5 further comprises:

providing a backup memory for storing the stack pointer in the case of the page-missing exception, and providing a temporary memory for storing each processor stack memory required for processing the page-missing exception;

when the stack pointer of the thread overflows a page boundary in the address space, a page-missing exception is generated, the stack pointer points to each processor stack memory, and the backup memory stores the stack pointer on the exception scene;

a new storage page is distributed to the kernel stack, and the new storage page is mapped to a target address space pointed by the kernel stack;

the stack pointer of the backup memory is switched to the kernel stack of a current thread pointed by the target address space, and the stack pointer is made to return to the position pointed by the stack pointer in the case of the page-missing exception.

The present invention further comprises a kernel stack distribution device, wherein a virtual address space is divided in advance for a thread kernel stack to use, wherein the distribution device comprises:

a distribution unit for distributing a contiguous target address space to the thread kernel stack based on the virtual address space when an instruction of creating threads is received;

a management unit for managing the mapping of the target address space of all the threads by using a bitmap, the target address space comprising an exception cache area and a storage area, the exception cache area being located at a header area of the target address space;

a mapping unit for distributing a storage page to the kernel stack, mapping the storage page to the storage area of the target address space, a stack pointer pointing to the target address space where the storage page of the kernel stack is located when the threads run, and a bottom of the target address space to which the storage page is mapped being an address boundary; and

a processing unit for distributing a new storage page to the kernel stack in a page-missing exception processing program, mapping the new storage page to a target address space pointed by the kernel stack, when the stack pointer of the thread overflows the page boundary in the address space, and a page-missing exception is generated in hardware.

Preferably, when the management unit manages the mapping of the target address space by using the bitmap, when a bit value in the bitmap is 0, it indicates a corresponding address space is not in use; when the bit value is 1, it indicates that the corresponding address space is in use, and a linear mapping relationship of the address space is expressed by formula (1):

$$T=A+N\times16KB \qquad (1)$$

wherein T represents an address of the created thread; A represents a start address of the virtual address space; and N represents a position of the bit value corresponding to the thread in the bitmap.

Preferably, a capacity of the storage area of the target address space, to which the storage page is mapped, is 16KB.

Preferably, the processing unit provides a backup memory for storing the stack point in the case of the page-missing exception, and provides a temporary memory for storing each processor stack memory required for processing the page-missing exception; when the stack pointer of the thread overflows a page boundary in the address space, a page-missing exception is generated, the stack pointer overflows each processor stack memory, and the backup memory stores the stack pointer on the exception scene; a new storage page is distributed to the kernel stack, and the new storage page is mapped to a target address space pointed by the kernel stack; the stack pointer of the backup memory is switched to the kernel stack of a current thread pointed by the target address space, and the stack pointer is made to return to the position pointed by the stack pointer in the case of the page-missing exception.

The beneficial effects of the invention are as follows:

In this technical solution, according to the method and the device for allocating the kernel stack, the memory is allocated according to the required allocation mode. When the stack pointer of the thread overflows the page boundary in the address, a new storage page is distributed to the kernel stack, and the new storage page is mapped to a target address space pointed by the kernel stack, so that the memory consumption of the kernel stack of the thread is greatly optimised, and the capability of detecting the kernel stack underflow exception is improved. A virtual address space is divided in advance for a thread kernel stack to use, so that the problem of memory fragmentation is effectively avoided.

BRIEF DESCRIPTION OF THE DRAWINGS

The accompanying drawings, together with the specification, illustrate exemplary embodiments of the present disclosure, and, together with the description, serve to explain the principles of the present invention.

Figure 1 is a schematic diagram of a stack change process during a function call;
Figure 2 is a schematic diagram of actual kernel stack usage of each thread;
Figure 3 is a bar chart, showing the distribution of kernel stack usage values of 1281 threads in Figure 2;
Figure 4 is a flowchart showing an embodiment of a kernel stack distribution method according to the present invention;
Figure 5 is a mapping relationship between a bitmap and a target address space;
Figure 6 is a schematic diagram of memory changes in an exception cache area of a thread;
Figure 7 is a schematic diagram, showing a process of processing a page-missing exception in the kernel stack;
Figure 8 is a schematic diagram, showing the switching process of a stack pointer when processing the page-missing exception;
Figure 9 is comparison graph in which a comparison is made between a previous kernel stack and an optimised kernel stack;
Figure 10 is a graph showing the proportion changes of the kernel stack before and after optimisation;
Figure 11 is a schematic diagram of stack overflow detection; and
Figure 12 is a block diagram showing an embodiment of a kernel stack distribution device according to the present invention.

DETAILED DESCRIPTION

The present invention will now be described more fully hereinafter, with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealised or overly formal sense, unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred, if not expressly stated.

As used herein, the term "plurality" means a number greater than one.

Hereinafter, certain exemplary embodiments according to the present disclosure will be described with reference to the accompanying drawings.

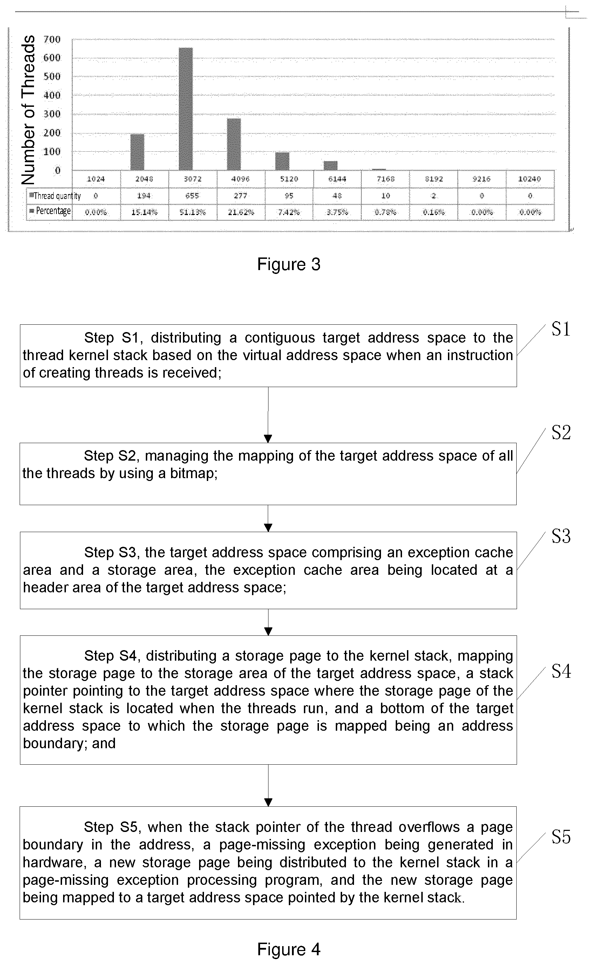

Figure 3 is a bar chart showing the distribution of kernel stack usage values of 1281 threads in Figure 2, and 1024 bytes is considered as a segment. All the threads use more than 1024 bytes of the kernel stack. Of these 1281 threads, 655 threads use the kernel stack in a range from 2048 bytes to 3072 bytes, accounting for 51% of the total threads. The number of thread using more than 4KB of the kernel stack is 155, accounting for 12.1%. The number of thread using more than 8KB of the kernel stack is 0.

From the statistical results in Figure 3, it can be known that more than 80% of the thread actually uses less than 4KB of the kernel stack, and the kernel allocates a 16KB of the kernel stack for each thread by default, which is a great waste of the kernel stack. In the Linux kernel code, the number of local variables declared in the implementation of each function is different. These local variables are allocated directly from the thread stack when the compiler compiles functions. Simple functions may not need to consume the stack or only consume a few bytes of the stack. While complex functions may consume several hundreds of bytes or even KB of the stack. During the execution of the code, the stack consumption of each function is gradually accumulated when top-level functions call bottom-level functions. During the kernel development process, the kernel cannot determine the depth of the function call of each module and whether recursion exists, so it is impossible to evaluate the kernel stack consumption of each thread. The only way is to find a relatively "safe" value to allocate the same number of the kernel stack for each thread. It should be noted that the selected "safe" value must be greater than a thread with the largest stack usage, and a certain amount of margin must be left. Otherwise, in some extreme cases, stack underflow may occur and lead to the crash. And it is the feature of the kernel stack that leads to the statistic result shown in Figure 3. Of more than 1200 running threads, once a kernel stack of one thread reaches or even approaches 8KB, it is necessary to uniformly set the kernel thread stack to 16 KB for the sake of security even if most threads only need less than 4 KB of stack. The memory of the kernel stack is not allocated as needed, therefore it is a great waste of the kernel stack on 64-bit systems.

From the analysis of the actual usage of the Linux kernel stack on the ARM64 system, it can be seen that there are two problems with the Linux kernel stack on the ARM64 architecture:

1. The memory consumption of the kernel stack is too large. If the system runs a large number of threads, the memory consumed by the kernel stack will become non-negligible. For example, if the system creates 2048 threads, then memory size 2048 × 16KB = 32MB is required. Such percentage of the memory is already very large on platforms with small capacity (memory size<1GB).

2. Fragmentation. On 64-bit systems, the kernel stack size is 16KB by default, equivalent to a size of four pages. Typically, the kernel stack is allocated directly from a linear mapping region, which requires contiguous physical addresses. After the system is running for a period of time, the problem of memory fragmentation occurs, then the allocation may fail, due to the failure to find four pages with contiguous physical addresses, and task creation failure may occur.

Based on the problems of excessive memory consumption and fragmentation in the existing kernel stack, the present invention provides a kernel stack distribution method and device, so that the memory consumption of the kernel stack of the thread is greatly optimised, and the problem of memory fragmentation is effectively avoided.

As shown in Figure 4, a kernel stack distribution method, wherein a virtual address space is divided in advance for a thread kernel stack to use with an interface_get_vm_area_node() interface, wherein the distribution method comprises:

Step S1, distributing a contiguous target address space to the thread kernel stack based on the virtual address space when an instruction of creating threads is received;
in this step, the address space is divided into N preset contiguous target address space, and each target address space corresponds to one thread; in this example, N=32768.
Step S2, managing the mapping of the target address space of all the threads by using a bitmap;
In this step, the bitmap is a data structure, and the state of the data is marked with bits of a continuous memory.

Furthermore, in Step S2, managing the mapping of the target address space by using the bitmap comprises:
in the bitmap, when a bit value is 0, it indicates a corresponding address space is not in use; when the bit value is 1, it indicates that the corresponding address space is in use, and a linear mapping relationship of the address space is expressed by formula (1):

$$T = A + N \times 16KB \qquad (1)$$

wherein T represents an address of the created thread; A represents a start address of the pre-allocated virtual address space; and N represents a position of the bit value corresponding to the thread in the bitmap.
In Step S2, the bitmap is used to manage this pre-selected divided vmalloc space. According to the same configuration, that is, a memory size of 16KB is allocated to each thread, it is represented by a bit in the bitmap. When the bit value is 0, it indicates the address space is not in use; when the bit value is 1, it indicates that the address space is in use. When creating a task, the system looks for bits of 0 from the bitmap, and sets the value of bits from 0 to 1, and the address space is marked as used. The address space is converted according to the bit offset.

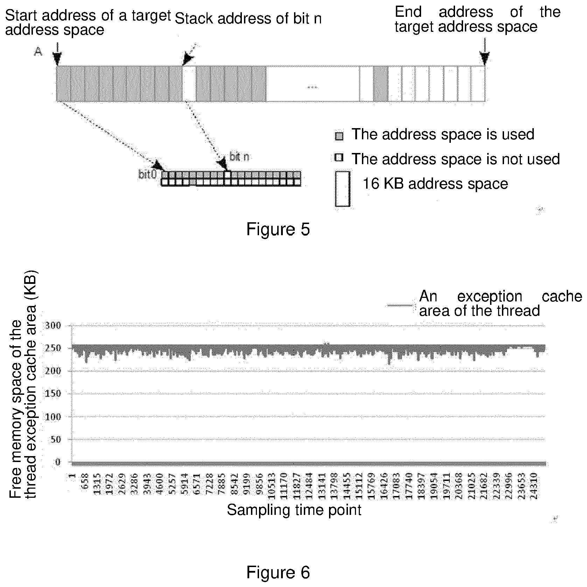

The bitmap and the address space are linearly mapped. Assuming that the start address of the virtual address space obtained through the _get_vm_area_node () interface during the boot phase is A, the address of the currently created thread is T, and the obtained bit position is N. Then the address space of the current thread is calculated by Formula (1). Figure 5 shows a mapping relationship between the bitmap and the target address space.

When the thread finishes running, it is also easy to reverse its position in the bitmap by the thread's kernel stack address. Calculate the position in the bitmap according to formula (2):

$$N = (T-A) \div 16KB \qquad (2)$$

In this way, the address space can be freed up simply by setting the value of bit in the bitmap to 0. Obviously, managing the pre-divided vmalloc address space by using a bitmap mechanism can greatly simplify the use of the vmalloc API when the page-missing exception is generated or when threads are created or revoked, so that the lock contention with the vmalloc API can be effectively avoided, and the deadlock problem can also be avoided.

Step S3, the target address space comprises an exception cache area and a storage area, the exception cache area is located at a header area of the target address space;
in this step, a page cache linked list is maintained. In the case of the page-missing exception, a free page is obtained from the linked list, and the free page is mapped to a page-missing address. The deadlock problem occurring in the processing of the page-missing exception can be effectively avoided by using this page caching mechanism.

alloc_page () is a basic interface function for allocating memory. However, it is a rather complex function in the kernel. Spin_lock (function) of zone is used in various aspects of the depth of function call. And the Spin_lock is widely used in various applications, such as allocation, memory release and memory migration.

Therefore, a small part of the page can be allocated in advance as a cache (i.e., a page cache), and the cache is linked to a linked list header for processing the page-missing exception. In this way, the lock of the zone can be ignored while processing the page-missing exception, all that needs to be done is to manage the synchronisation problem of this cache separately, and the problem is greatly resolved.

The cache is gradually consumed and reduced owing to the processing of the page-missing exception, so a work may be provided to periodically maintain the page cache. When the cache is insufficient, a part of page may be allocated from a partner system to supplement the page cache. In addition, when the thread stops running and releases the kernel stack of the thread, the page occupied by the released kernel stack of the thread may also be used to supplement the page cache in the case of the page-missing exception. From the distribution statistics of the thread stack in Figure 3, it can be known that a page-missing exception is not an event that occurs with high probability. So only a small amount of page cache needs to be maintained.

Figure 6 maintains a 256KB page cache, which shows the change of memory of page cache during the test. It can be seen that most of the time, the memory of cached page is maintained at about 256KB, that is, the full state, and only occasionally the memory of cached page drops to about 200KB, which is still enough to completely consume the cache.

Step S4, a storage page is distributed to the kernel stack, the storage page is mapped to the storage area of the target address space, a stack pointer points to the target address space where the storage page of the kernel stack is located when the threads run, and a bottom of the target address space to which the storage page is mapped is an address boundary;
wherein, a capacity of the storage area of the target address space, to which the storage page is mapped, is 16KB.

Step S5, when the stack pointer of the thread overflows the page boundary in the address space, a page-missing exception is generated in hardware (that a processor, MMU hardware, generates the page-missing exception is a core mechanism that may take effect in the present invention). A new storage page is distributed to the kernel stack in a page-missing exception processing program, and the new storage page is mapped to a target address space pointed by the kernel stack.

In this step, if the stack pointer points to the page boundary when it underflows, it is not necessarily lead to the page-missing exception in the hardware, and only when the stack pointer did underflow the page boundary does the page-missing exception occur.

Furthermore, in Step S5, when the stack pointer of the thread overflows the page boundary in the address space, a page-missing exception is generated in hardware, and a new storage page is distributed to the kernel stack in a page-missing exception processing program, and the new storage page is mapped to a target address space pointed by the kernel stack, and Step 5 further comprises:

providing a backup memory for storing the stack pointer in the case of the page-missing exception, and providing a temporary memory for storing each processor (per-cpu, that is, each processor is a management mechanism on multi-core processor system, and the program allocates a section of free memory for each processor in advance for processing a stack in the case of page-missing exception) stack memory required for processing the page-missing exception;

when the stack pointer of the thread overflows a page boundary in the address space, a page-missing exception is generated, the stack pointer points to each processor stack memory, and the backup memory stores the stack pointer on the exception scene;

a new storage page is distributed to the kernel stack, and the new storage page is mapped to a target address space pointed by the kernel stack;

the stack pointer of the backup memory is switched to the kernel stack of a current thread pointed by the target address space, and the stack pointer is made to return to the position pointed by the stack pointer in the case of the page-missing exception.

The page-missing exception is an implementation mechanism used to delay the memory request from the application in the Linux kernel. The application may make a request for a large size of memory from the kernel through brk or mmap (a method for memory-mapped file) system calls. However, the kernel just divides the address space of the corresponding size according to the application's request, and does not actually allocate memory for the application. Only when the application program actually accesses the memory it requested will the processor's MMU (Memory Management Unit) generate a page-missing exception. It is the kernel that actually allocates the memory to the application and establishes a corresponding mapping in the page-missing exception processing program. Then, the application finally obtains the memory it requested.

This principle of the page-missing exception is allocating as required. That is, only when the application accesses the memory will the kernel allocates the memory for it. Otherwise, if sufficient amount of memory is allocated to the application when the request is made, while in practice, the application does not need so much memory, resulting in a great waste of memory and a lack of memory.

For the kernel stack of the thread, the present invention uses such a page-missing exception processing logic. Only when the stack of the thread grows to a corresponding address range will the memory be allocated to the stack. This is the basis for optimising the kernel stack of the thread.

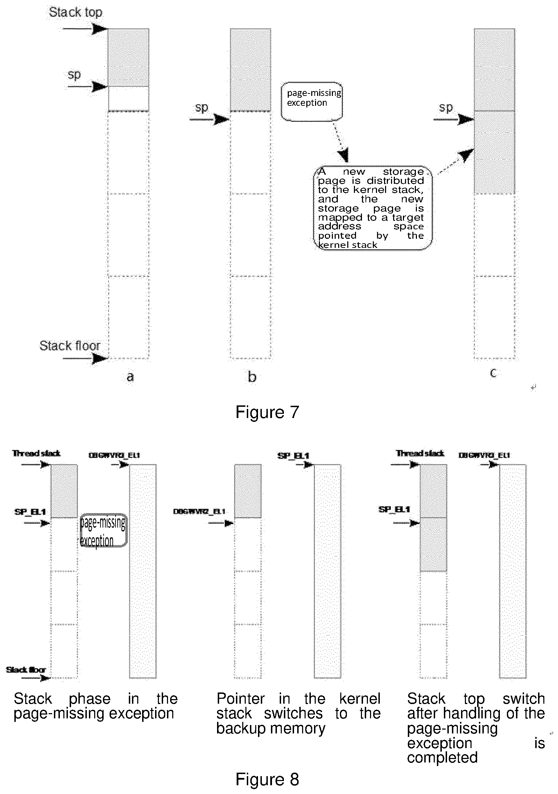

Figure 7 is a schematic diagram showing a process of processing a page-missing exception in the kernel stack in this mode. When creating a thread, the kernel stack of the thread is processed according to the following conditions and steps.

1. The 16KB (4 pages) of address space is still divided for the kernel stack of each thread, but the address space is not selected in the linear mapping area of the kernel, but in the address space of vmalloc.

2. For the efficiency, a first page is allocated to its kernel stack when creating the thread, and the remaining three pages are not allocated then. That is, part a in Figure 7, a solid box is the first page allocated to the thread, and other three dashed boxes below the solid box are pages have not been allocated yet. When the thread starts running, the stack pointer points to the address space where the first page is located. As function call deepens, the stack pointer moves downward. Dotted line is the address boundary of the first page.

3. Creating a page-missing exception processing function for the kernel stack. When the depth of the function call increases and the stack pointer moves downward further and moves across the boundary of the first page, the process may generate a page-missing exception. Then ARM64 CPU will forcible skip to the page-missing exception processing function for execution.

4. In the page-missing exception processing function, the following logic processing is completed:

a new page is allocated;
the new page is mapped to the address space pointed by the stack pointer, that is, part b in Figure 7.

5. After the processing of the page-missing exception is completed, the CPU returns to the instruction that caused the exception to continue execution, because the mapping to the address has been established in step b, so the stack pointer can be accessed normally, and the program can be executed normally. This process refers to part c in Figure 7, and the filled parts are newly mapped pages.

After completing the above steps, the two pages corresponding to the address space below the kernel stack address space are still unallocated and are indicated by dashed boxes. If the stack pointer continues to move downward and move across the boundary of the second page, the page-missing exception is still be triggered, and continues to execute the page-missing exception processing program in the page-missing exception processing function, until a third page is filled. The process is applied to following page-missing processing until the fourth page is completed filled.

As can be seen from Figure 7, if the program's function call depth deepens into the deepest position, such that the stack pointer may move into the second page only, then during the thread execution, the third and fourth page will never be used and will not be allocated. Compared to the present kernel stack allocation scheme, these two pages can be saved.

It seems that the above-mentioned model theory is perfect in all aspects, however, in practice, it may still encounter some technical problems in the implementation of ARM64 architecture. The technical problems are as follows:

1. Problems with the stack pointer during the processing of the exception. The Linux kernel runs on the EL1 exception level on the ARM64 architecture. There is only one stack pointer SP_EL1 for the entire exception level. In the case of the page-missing exception, SP_EL1 and all other general-purpose registers belong to the exception environment context and cannot be damaged.

2. Deadlock problem. In the fourth step of the above model, a new page needs to be allocated and the new page needs to be mapped. If the available API of the kernel is directly used, these API may operate some common locks to some extent. If the page-missing exception is sent immediate that the locks are held, the deadlock will occur definitely if continue to call those API.

The following technical solutions may be adopted to solve the above-mentioned technical problems: When the ARM64 architecture handles all kinds of exceptions by default, the registers of the exception scene are saved to the kernel stack of the current thread. Memory allocation and mapping creation needs to be done when the page-missing exception occurs. However, the stack of the current thread does not exist, so these two are conflicting to each other. Since such a page-missing exception may occur on any CPU, a per-cpu array may be defined and be used as a temporary stack when processing the page-missing exception. The stack is switched to the stack of the current task once the processing of the page-missing exception is completed.

Since CPU is in EL1 mode when ARM64 is processing the exception, synchronous exception, IRQ, FIQ or asynchronous exception, only one stack point exists in EL1 mode. When the page-missing exception occurs, the SP_EL1 register still points to the kernel stack of the current thread, and the page corresponding to the current stack address is not allocated. Therefore, all the registers in the exception scene cannot be directly saved to the kernel stack of the current thread. For handling the page-missing exception, all the registers in the exception scene needs to be completely saved, including SP_EL1. If SP_EL1 is directly replaced with the stack top of the per-cpu then, it will inevitably cause the stack pointer of the current thread to be lost. In order to smoothly switch SP_EL1 to the stack top of the per-cpu, intermediate registers must be used for temporary transition. However, all the registers in the exception scene are not saved, and any assignment operation to these general-purpose registers will destroy the exception scene.

The only way to avoid such a problem is to find some not commonly used registers from a coprocessor of the processor to temporarily store data. Fortunately, in Amlogic's solution, four watch point registers are implemented. These 4 watch point registers are readable and writable, and are 64bit wide. Since the function of watch point is rarely used, and user space and drivers seldom uses such a function, it is generally safe to use it for store the stack top of the per-cpu. In the end, DBGWVR3_EL1register is selected to store the stack top of the per-cpu, and DBGWVR2_EL1 is selected to back up the stack pointer in the case of the exception.

In this way, when an exception occurs, the values of the registers DBGWVR3_EL1 and SP_EL1 pointing to the top of the per-cpu stack can be exchanged. SP_EL1 is made to point to the stack top of the per-cpu, and register DBGWVR2_EL1 backs up the thread stack pointer of the exception scene. After handling of the page-missing exception is completed, register DBGWVR2_EL1 and SP_EL1 register are exchanged back, so that the stack pointer is made to point to the kernel stack of the current thread again. Then the stack pointer returns to the position where the exception occurs, and execution continues. The memory pointed by the stack pointer has been mapped, so it can continue to be accessed. Figure 8 shows three stages in which a process of the stack switch during the page-missing exception handling.

The page-missing exception handling is transparent for all the threads, and the process is similar to generating an interrupt.

In this embodiment, the memory is allocated as required. When the stack pointer of the thread points to the address boundary, a new storage page is distributed to the kernel stack, and the new storage page is mapped to a target address space pointed by the kernel stack, so that the memory consumption of the kernel stack of the thread is greatly optimised, and the capability of detecting the kernel stack underflow exception is improved. A virtual address space is divided in advance for a thread kernel stack to use, so that the problem of memory fragmentation is effectively avoided.

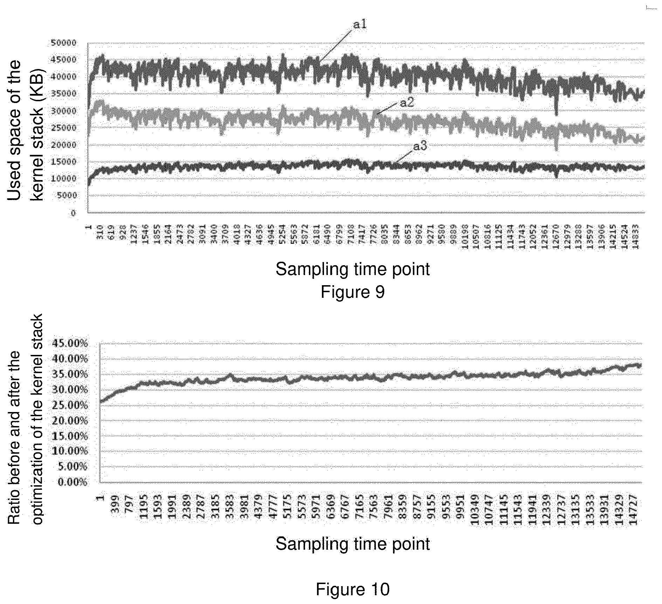

Based on the code of Android O, a test code (tag) containing the optimised invention is compiled. The number of the kernel stack printed in the old way and the number of the current stack actually used after optimisation are increased in the test code. Then a test run is carried out on the P212 platform. In order to run as many applications as possible to show the differences, more than 10 applications are installed from the application market, and all the applications are tested with the "monkey" command. Then print logs are grabbed from a serial port, and the usage of the kernel stack is extracted from the print logs. After five and a half hours of monkey test, two graphs as shown in Figures 9 and 10 are obtained.

In Figure 9, a1 is a curve showing the changes of the memory consumption by the original kernel stack solution during the monkey test process, a3 is a curve showing the changes of the memory consumption by the optimised kernel stack solution, and a2 is a difference between the two solutions, that is, a curve showing the changes of the saved memory consumption. As can be seen from Figure 9, with the progress of the monkey test, the original kernel stack solution consumed about 40MB of memory, that is, more than 2,500 threads are running. The optimised kernel stack consumes less than 15MB of memory. From the comparison of the curve a2, about 25MB to 30MB of memory can be saved. For a platform with a small memory capacity less than or equal to 1GB, the savings can really made a difference.

Figure 10 is a curve showing a ratio of the changes of the memory consumption by the original kernel stack solution to the changes of the memory consumption by the optimised kernel stack solution. It can be seen from the Monkey test process that the ratio is around 25% at the beginning of the test. As the test progresses, the stack usage of threads keeps exceeding 4KB, which triggers a page-missing exception, so the actual consumption of the kernel stack increases. But the final proportional curve is stable and maintained between 35% and 40%.

In the existing native stack solution, the kernel stack uses the memory in a linearly mapped area. For any modules and threads, since all memory in the linearly mapping area can be accessed indiscriminately, consequently, if the stack overflow or underflow occurs, the kernel is not able to detect the overflow or underflow since it lack a relevant mechanism. In some special occasions, for example, when the thread exits, the kernel is able to detect the stack overflow or underflow by judging the padding data filled in certain specific positions in the stack. However, such a detection does not make any difference or help relieve the situation.

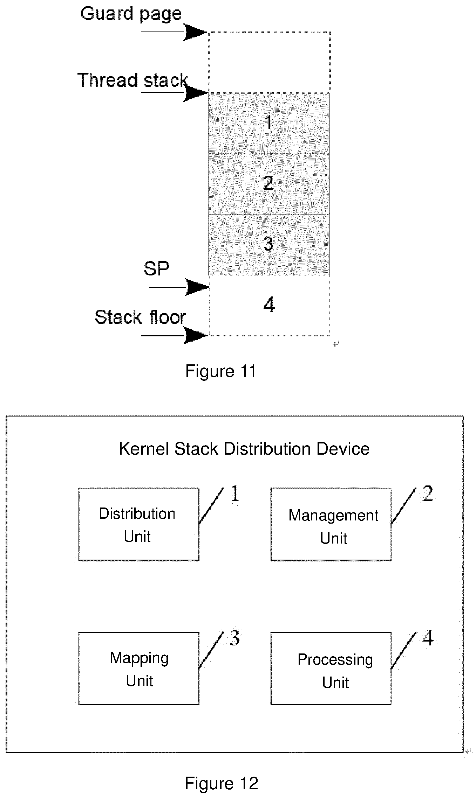

The implementation achieved by using the kernel stack according to the present invention has the capability of early warning of stack overflow. As shown in Figure 11, since the kernel stack (Thread stack) is created in the vmalloc area, the vmalloc interface will create an additional page address space by default when allocating memory. The additionally created address space is referred to as Guard page (head page), and the address space does not actually allocate memory. For example, if a invoker uses the vmalloc function to request for 16KB memory (four pages), the internal space of vmalloc actually divides the 20KB range (4 +1 pages) out of the address space of vmalloc. Only the lower 16KB actually allocates memory, and the remaining Guard page does not allocate the memory. In this way, if a user of vmalloc moves across the boundary when using the memory, the access address is located on the Guard page, then a page-missing exception of MMU will be triggered, and the kernel can detect and report this error.

Figure 11 also shows how the kernel stack optimisation solution warns of stack underflow. When the stack pointer continues to grow downward to the last page of the stack address space, a print of the function call stack can be added to the page-missing exception processing function to alert. In this way, the stack overflow problem can be accurately located by analysing the logs.

As shown in Figure 12, the present invention further provides a kernel stack distribution device, wherein a virtual address space is divided in advance for a thread kernel stack to use, wherein the distribution device comprises:

a distribution unit 1 for distributing a contiguous target address space to the thread kernel stack based on the virtual address space when an instruction of creating threads is received;

a management unit 2 for managing the mapping of the target address space of all the threads by using a bitmap, the target address space comprising an exception cache area and a storage area, the exception cache area being located at a header area of the target address space;

a mapping unit 3 for distributing a storage page to the kernel stack, mapping the storage page to the storage area of the target address space, a stack pointer pointing to the target address space where the storage page of the kernel stack is located when the threads run, and a bottom of the target address space to which the storage page is mapped being an address boundary; and

a processing unit 4 for distributing a new storage page to the kernel stack in a page-missing exception processing program, mapping the new storage page to a target address space pointed by the kernel stack, when the stack pointer of the thread overflows the page boundary in the address space and a page-missing exception is generated in hardware.

In this embodiment, the memory is allocated as required. When the stack pointer of the thread points to the address boundary, a new storage page is distributed to the kernel stack, and the new storage page is mapped to a target address space pointed by the kernel stack, so that the memory consumption of the kernel stack of the thread is greatly optimised, and the capability of detecting the kernel stack underflow exception is improved. A virtual address space is divided in advance for a thread kernel stack to use, so that the problem of memory fragmentation is effectively avoided. In a preferred embodiment, when the management unit 2 manages the mapping of the target address space by using the bitmap, when a bit value in the bitmap is 0, it indicates a corresponding address space is not in use; when the bit value is 1, it indicates that the corresponding address space is in use, and a linear mapping relationship of the address space is expressed by formula (1):

$$T = A + N \times 16KB \qquad (1)$$

wherein T represents an address of the created thread; A represents a start address of the virtual address space; and N represents a position of the bit value corresponding to the thread in the bitmap.

In this embodiment, a capacity of the storage area of the target address space, to which the storage page is mapped, is 16KB.

In a preferred embodiment, the processing unit 4 provides a backup memory for storing the stack point in the case of the page-missing exception, and provides a temporary memory for storing each processor stack memory required for processing the page-missing exception; when the stack pointer of the thread overflows a page boundary in the address space, a page-missing exception is generated, the stack pointer overflows each processor stack memory, and the backup memory stores the stack pointer on the exception scene; a new storage page is distributed to the kernel stack, and the new storage page is mapped to a target address space pointed by the kernel stack; the stack pointer of the backup memory is switched to the kernel stack of a current thread pointed by the target address space, and the stack pointer is made to return to the position pointed by the stack pointer in the case of the page-missing exception.

The present invention has the following advantages:

1. Based on the page-missing exception model, only when the page-missing exception is triggered by the stack underflow can the memory be allocated, so that the memory is allocated as required;
2. stack switch and deadlock issues resulting from the page-missing exception are resolved based on characteristics of the processor;
3. the memory consumption of the kernel stack of the thread is greatly optimised and is reduced to about 35% compared to that of the original solution;
4. the problem of memory fragmentation is effectively avoided; and
5. the capability of detecting the kernel stack overflow and underflow exception is improved.

Thanks to the above-mentioned properties, the problems of memory pressure and memory fragmentation on a memory platform resulting from the kernel stack may be greatly relieved, and the stalling of the platform with a small memory due to the shortage of memory may be reduced.

The above descriptions are only the preferred embodiments of the invention, not thus limiting the embodiments and scope of the invention. Those skilled in the art should be able to realise that the schemes obtained from the content of specification and drawings of the invention are within the scope of the invention.

**Claims**

1. A kernel stack distribution method, wherein a virtual address space is divided in advance for a thread kernel stack to use, wherein the distribution method comprises:

Step S1, distributing a contiguous target address space to the thread kernel stack based on the virtual address space when an instruction of creating threads is received;
Step S2, managing the mapping of the target address space of all the threads by using a bitmap;
Step S3, the target address space comprising an exception cache area and a storage area, the exception cache area being located at a header area of the target address space;
Step S4, distributing a storage page to the kernel stack, mapping the storage page to the storage area of the target address space, a stack pointer pointing to the target address space where the storage page of the kernel stack is located when the threads run, and a bottom of the target address space to which the storage page is mapped being an address boundary; and
Step S5, when the stack pointer of the thread overflows a page boundary in the address, a page-missing exception being generated in hardware, a new storage page being distributed to the kernel stack in a page-missing exception processing program, and the new storage page being mapped to a target address space pointed by the kernel stack.

2. The kernel stack distribution method of claim 1, wherein in Step S2, managing the mapping of the target address space by using the bitmap comprises: in the bitmap, when a bit value is 0, it indicates a corresponding address space is not in use; when the bit value is 1, it indicates that the corresponding address space is in use, and a linear mapping relationship of the address space is expressed by formula (1):

$$T = A + N \times 16KB \qquad (1)$$

wherein T represents an address of the created thread; A represents a start address of the virtual address space; and N represents a position of the bit value corresponding to the thread in the bitmap.

3. The kernel stack distribution method of claim 1, wherein a capacity of the storage area of the target address space, to which the storage page is mapped, is 16KB.

4. The kernel stack distribution method of claim 1, wherein in Step S5, when the stack pointer of the thread overflows a page boundary in the address, a new storage page is distributed to the kernel stack, and the new storage page is mapped to a target address space pointed by the kernel stack, and Step 5 further comprises:

providing a backup memory for storing the stack pointer in the case of the page-missing exception, and providing a temporary memory for storing each processor stack memory required for processing the page-missing exception; when the stack pointer of the thread overflows a page boundary in the address space, a page-missing exception is generated, the stack pointer points to each processor stack memory, and the backup memory stores the stack pointer on the exception scene; a new storage page is distributed to the kernel stack, and the new storage page is mapped to a target address space pointed by the kernel stack; the stack pointer of the backup memory is switched to the kernel stack of a current thread pointed by the target address space, and the stack pointer is made to return to the position pointed by the stack pointer in the case of the page-missing exception.

5. A kernel stack distribution device, wherein a virtual address space is divided in advance for a thread kernel stack to use, wherein the distribution device comprises:

a distribution unit for distributing a contiguous target address space to the thread kernel stack based on the virtual address space when an instruction of creating threads is received; a management unit for managing the mapping of the target address space of all the threads by using a bitmap, the target address space comprising an exception cache area and a storage area, the exception cache area being located at a header area of the target address space; a mapping unit for distributing a storage page to the kernel stack, mapping the storage page to the storage area of the target address space, a stack pointer pointing to the target address space where the storage page of the kernel stack is located when the threads run, and a bottom of the target address space to which the storage page is mapped being an address boundary; and a processing unit for distributing a new storage page to the kernel stack in a page-missing exception processing program, mapping the new storage page to a target address space pointed by the kernel stack, when the stack pointer of the thread overflows the page boundary in the address space and a page-missing exception is generated in hardware.

6. The kernel stack distribution device of claim 5, wherein when the management unit manages the mapping of the target address space by using the bitmap, when a bit value in the bitmap is 0, it indicates a corresponding address space is not in use; when the bit value is 1, it indicates that the corresponding address space is in use, and a linear mapping relationship of the address space is expressed by formula (1):

$$T=A+N \times 16KB \qquad (1)$$

wherein T represents an address of the created thread; A represents a start address of the virtual address space; and N represents a position of the bit value corresponding to the thread in the bitmap.

7. The kernel stack distribution device of claim 5, wherein a capacity of the storage area of the target address space, to which the storage page is mapped, is 16KB.

8. The kernel stack distribution device of claim 5, wherein the processing unit provides a backup memory for storing the stack point in the case of the page-missing exception, and provides a temporary memory for storing each processor stack memory required for processing the page-missing exception; when the stack pointer of the thread overflows a page boundary in the address space, a page-missing exception is generated, the stack pointer overflows each processor stack memory, and the backup memory stores the stack pointer on the exception scene; a new storage page is distributed to the kernel stack, and the new storage page is mapped to a target address space pointed by the kernel stack; the stack pointer of the backup memory is switched to the kernel stack of a current thread pointed by the target address space, and the stack pointer is made to return to the position pointed by the stack pointer in the case of the page-missing exception.

Figure 1

Figure 2

| Number of Threads | 1024 | 2048 | 3072 | 4096 | 5120 | 6144 | 7168 | 8192 | 9216 | 10240 |
|---|---|---|---|---|---|---|---|---|---|---|
| Thread quantity | 0 | 194 | 655 | 277 | 95 | 48 | 10 | 2 | 0 | 0 |
| Percentage | 0.00% | 15.14% | 51.13% | 21.62% | 7.42% | 3.75% | 0.78% | 0.16% | 0.00% | 0.00% |

Figure 3

Step S1, distributing a contiguous target address space to the thread kernel stack based on the virtual address space when an instruction of creating threads is received; — S1

Step S2, managing the mapping of the target address space of all the threads by using a bitmap; — S2

Step S3, the target address space comprising an exception cache area and a storage area, the exception cache area being located at a header area of the target address space; — S3

Step S4, distributing a storage page to the kernel stack, mapping the storage page to the storage area of the target address space, a stack pointer pointing to the target address space where the storage page of the kernel stack is located when the threads run, and a bottom of the target address space to which the storage page is mapped being an address boundary; and — S4

Step S5, when the stack pointer of the thread overflows a page boundary in the address, a page-missing exception being generated in hardware, a new storage page being distributed to the kernel stack in a page-missing exception processing program, and the new storage page being mapped to a target address space pointed by the kernel stack. — S5

Figure 4

Start address of a target address space  Stack address of bit n  End address of the target address space

The address space is used
The address space is not used
16 KB address space

Figure 5

Figure 6

Figure 7

Stack phase in the page-missing exception

Pointer in the kernel stack switches to the backup memory

Stack top switch after handling of the page-missing exception is completed

Figure 8

Figure 9

Figure 10

Guard page

Thread stack

SP

Stack floor

Figure 11

Kernel Stack Distribution Device

Distribution Unit — 1

Management Unit — 2

Mapping Unit — 3

Processing Unit — 4

Figure 12

Europäisches
Patentamt

European
Patent Office

Office européen
des brevets

## EUROPEAN SEARCH REPORT

Application Number

EP 19 21 9520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/198464 A1 (SOKOLOV STEPAN [US]) 8 September 2005 (2005-09-08) * paragraph [0004] * * paragraph [0007] - paragraph [0011] * * paragraph [0024] * * paragraph [0032] * * paragraph [0038] - paragraph [0043] * ----- | 1-8 | INV. G06F9/50 |
| X | US 5 950 221 A (DRAVES RICHARD P [US] ET AL) 7 September 1999 (1999-09-07) * column 2, line 24 - line 43 * * column 3, line 25 - line 34 * ----- | 1-8 | |
| A | US 2004/034742 A1 (FIELD SCOTT A [US] ET AL) 19 February 2004 (2004-02-19) * the whole document * ----- | 1-8 | |
| X | US 2004/019744 A1 (BOUCHER MICHAEL L [US]) 29 January 2004 (2004-01-29) * paragraph [0054] * ----- | 1-8 | |
| A | US 6 012 129 A (HARTNER WILLIAM HENRY [US] ET AL) 4 January 2000 (2000-01-04) * the whole document * ----- | 1-8 | TECHNICAL FIELDS SEARCHED (IPC) G06F |

The present search report has been drawn up for all claims

| Place of search | Date of completion of the search | Examiner |
|---|---|---|
| The Hague | 24 March 2020 | Alecu, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 9520

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2020

| Patent document cited in search report | Publication date | Patent family member(s) | Publication date |
|---|---|---|---|
| US 2005198464 A1 | 08-09-2005 | NONE | |
| US 5950221 A | 07-09-1999 | NONE | |
| US 2004034742 A1 | 19-02-2004 | NONE | |
| US 2004019744 A1 | 29-01-2004 | NONE | |
| US 6012129 A | 04-01-2000 | NONE | |

EPO FORM P0459

For more details about this annex : see Official Journal of the European Patent Office, No. 12/82